# FASCICULE DE BREVET EUROPEEN

(11) **EP 1 248 239 B1**
(45) Date de publication et mention de la délivrance du brevet: **25.06.2008**
(21) Numéro de dépôt: 02358005.3
(22) Date de dépôt: 02.04.2002
(51) Int. Cl.: G07C 9/00, G06K 7/10

(54) **Circuit intégré sans contact comprenant un circuit anticollision à logique câblée**
Kontaktlose integrierte Schaltung mit einer festverdrahteten Antikollisionsschaltung
Contactless integrated circuit containing a hardwired anticollision circuit

(30) Priorité: 04.04.2001 FR 0104562
(43) Date de publication de la demande: 09.10.2002
(73) Titulaire: STMicroelectronics SA, F-92120 Montrouge (FR)
(72) Inventeur: KARI, Ahmed, Résidence le Musset, Bât. G, 13100 Aix en Provence (FR); Moreaux, Christophe, 13510 Eguilles (FR)
(74) Mandataire: Marchand, André

(56) Documents cités:
- EP-A- 0 495 708
- EP-A- 0 696 011
- EP-A- 0 702 323
- EP-A- 0 935 222
- FR-A- 2 736 449
- FR-A- 2 772 164
- FR-A- 2 780 231

## Description

La présente invention concerne les circuits intégrés et notamment les circuits intégrés sans contact, pourvus d'une interface de communication fonctionnant par induction électromagnétique et couplage inductif.

La présente invention concerne plus particulièrement la mise en oeuvre, dans un circuit intégré, d'une fonction à logique câblée permettant d'exécuter une demande d'identification sélective accompagnée d'un code de sélection.

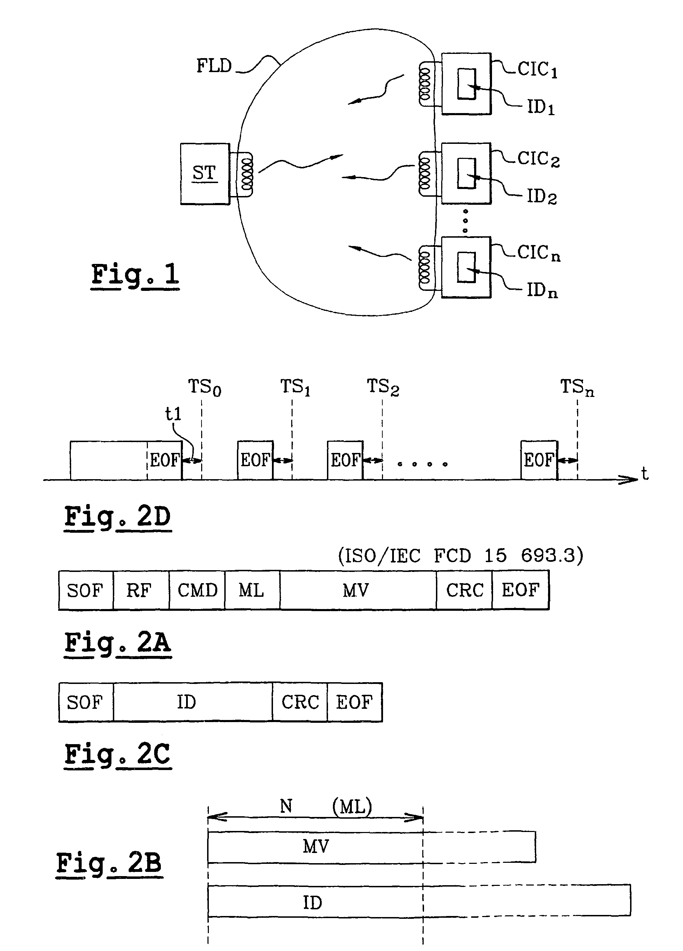

La figure 1 représente de façon schématique une situation dans laquelle une demande d'identification sélective est utilisable. Une station ST d'émission-réception de données équipée d'une bobine d'antenne et fonctionnant par couplage inductif émet un champ magnétique FLD. Une pluralité de circuits intégrés sans contact CIC1, CIC2,... CICn, ou transpondeurs, également équipés de bobines d'antenne, se trouvent dans le périmètre d'émission de la station (champ d'interrogation) et sont susceptibles d'engager une communication avec cette dernière. Chaque circuit intégré est identifiable grâce à un code d'identification ID1, ID2,...IDn stocké dans une mémoire interne. Bien que cela ne soit pas représenté, chaque circuit intégré est en pratique agencé sur un support portable pour former un objet fonctionnant sans contact comme une carte à puce sans contact, une étiquette électronique, etc..

Lorsque la station ST veut communiquer avec l'un des circuits intégrés, ou faire l'inventaire des circuits intégrés présents dans le champ d'interrogation, la station envoie une demande d'identification sélective accompagnée d'un code de sélection. Chaque circuit intégré compare son code ID avec le code de sélection et renvoie à la station un message d'identification comprenant le code ID si le résultat de la comparaison est positif. En pratique, le code de sélection envoyé par la station est généralement d'une longueur inférieure au code ID. De plus, la demande d'identification sélective peut être accompagnée d'un paramètre spécifiant le nombre N de bits devant être comparés entre les deux codes. Enfin, les circuits intégrés ayant un code ID identique au code de sélection répondent généralement sur une échelle de réponse comprenant plusieurs positions de réponse, afin d'éviter les collisions entre réponses. Ces positions de réponse peuvent être aléatoires ou dépendre de données internes aux circuits intégrés.

A titre d'exemple, la figure 2A représente le format standard d'une demande d'identification sélective telle que prévue par la norme ISO/IEC/FCD 15693-3, appelée commande INVENTORY et permettant à une station d'émission-réception de données de faire l'inventaire des circuits sans contact présents dans son champ d'interrogation. La commande INVENTORY comprend un champ d'ouverture de trame SOF ("Start Of Frame"), un champ "drapeaux de requête" RF ("Request Flags") d'une longueur de 8 bits, un champ "commande" CMD d'une longueur de 8 bits (contenant le code de la commande INVENTORY), un champ "longueur de masque" ML ("Mask Length") d'une longueur de 8 bits, un champ "valeur de masque" MV ("Mask Value") d'une longueur de 0 à 8 octets, un code CRC et un champ de fin de trame EOF ("End Of Frame"). Le terme "masque" désigne le code de sélection, chaque circuit intégré devant comparer son code d'identification ID au masque MV fourni par la station. Le nombre N de bits à comparer entre le code ID et le masque MV est spécifié par le champ ML. Ainsi, comme cela est illustré en figure 2B, un circuit intégré ayant un code ID de M bits recevant une demande d'identification sélective comprenant un champ ML égal à N, ne compare que N bits du code ID avec N bits du masque MV.

La figure 2C représente le format de la réponse que renvoie un circuit intégré ayant un code ID comprenant N bits similaires au masque MV. Cette réponse comprend simplement le numéro d'identification ID du circuit intégré précédée du champ SOF et suivie d'un code CRC et du champ de fin de trame EOF.

Toujours pour fixer les idées, la figure 2D représente l'échelle de réponse à une commande INVENTORY. Cette échelle de réponse comprend diverses positions de réponse TS0, TS1,... TSn ("Time Slots") sur lesquelles les circuits intégrés peuvent se positionner. Ces positions de réponse sont ici sous le contrôle de la station et sont déterminées par l'envoi de messages de fin de trame EOF, auxquels s'ajoute un temps de réponse t1. Les circuits intégrés choisissent leur position de réponse en fonction d'un nombre P, qui est ici défini par les 4 bits du code ID qui suivent les N bits à comparer avec le masque MV (16 positions de réponse possibles). Il sera noté qu'une station peut également forcer tous les circuits intégrés à répondre sur la première position de réponse TS0 en mettant à 1 le bit 5 du champ RF.

En pratique, le traitement d'une demande d'identification sélective dans un circuit intégré à microprocesseur ne pose généralement pas de difficulté et est effectué par un programme se chargeant de comparer les codes et d'émettre le code ID si le résultat de la comparaison est positif. Le traitement d'une demande d'identification sélective dans un circuit intégré à logique câblée s'avère par contre plus délicat et nécessite la prévision d'une "circuiterie" relativement complexe occupant une surface de silicium non négligeable.

Un objectif général de la présente invention est de prévoir un circuit à logique câblée d'une structure simple et peu encombrante capable de traiter une demande d'identification sélective.

FR 2 736 449 décrit, en relation avec sa figure 2, un circuit intégré à liaison filaire comprenant un registre de masque 32 dont le contenu est comparé avec une partie P1 d'un code d'identification présent dans une mémoire 34 à sortie parallèle. Le code d'identification est comparé directement avec le masque en appliquant la sortie de la mémoire à l'entrée d'un comparateur.

Un autre objectif de la présente invention est de prévoir un circuit à logique câblée du type mentionné ci-dessus qui soit compatible avec un stockage du code d'identification d'un circuit intégré dans une mémoire à sortie série.

Une mémoire à sortie série présente en effet l'avantage d'être d'une structure simple et peu coûteuse en ce qu'elle ne nécessite qu'un seul amplificateur de lecture. Une telle mémoire présente en contrepartie un temps de lecture (bit à bit) assez long au regard du temps conféré pour répondre à une demande d'identification. Si l'on se réfère par exemple à la norme précitée, le temps minimal t1 entre la réception de la commande INVENTORY et la première position de réponse TS0 est de l'ordre de 320 microsecondes (figure 2D). Il faut ainsi prévoir un premier registre tampon pour stocker le masque MV et un second registre tampon pour stocker le code d'identification ID, le second registre tampon permettant d'émettre rapidement le code ID après l'avoir comparé au code de sélection, sans devoir lire une deuxième fois la mémoire série.

Toutefois, deux registres tampons de plusieurs octets chacun occupent une place non négligeable et vont à l'encontre des exigences de simplicité d'un circuit à logique câblée.

Ainsi, encore un autre objectif de la présente invention est de prévoir un circuit à logique câblée capable de traiter une demande d'identification sélective avec un minimum de registres tampons.

Ces objectifs sont atteints par la prévision d'un procédé pour exécuter, dans un circuit intégré auquel est attribué un code d'identification de M bits, une demande d'identification sélective accompagnée d'un code de sélection de N bits, comprenant les étapes consistant à prévoir un registre à décalage, une mémoire série et un comparateur logique, stocker le code d'identification du circuit intégré dans la mémoire série, charger le code de sélection reçu dans le registre à décalage, relier une sortie série du registre à décalage à une première entrée d'un comparateur logique, relier une sortie série de la mémoire à une deuxième entrée du comparateur et à une entrée série du registre à décalage, appliquer M impulsions de décalage au registre à décalage et M impulsions de lecture à la mémoire, inhiber le comparateur quand N impulsions de décalage et de lecture ont été appliquées au registre et à la mémoire, et délivrer à une interface de communication du circuit intégré, à un instant déterminé, les données présentes dans le registre à décalage, si le comparateur délivre un signal d'égalité.

Selon un mode de réalisation, le procédé comprend une étape de décomptage du nombre N au moyen d'un premier décompteur dans lequel le nombre N est chargé, et une étape de délivrance d'un signal d'inhibition du comparateur quand le zéro est atteint.

Selon un mode de réalisation, le procédé comprend une étape d'inhibition anticipée du comparateur quand le comparateur délivre un signal d'inégalité.

Selon un mode de réalisation, l'étape de délivrance à l'interface de communication de données présentes dans le registre à décalage comprend la connexion d'une sortie du registre à décalage à l'interface de communication du circuit intégré lorsqu'un signal d'autorisation est délivré, et la délivrance du signal d'autorisation au plus tard lorsque l'instant déterminé est atteint, sauf si le comparateur délivre un signal d'inégalité.

Selon un mode de réalisation, le signal d'autorisation est délivré au moyen d'un second décompteur prévu pour compter un nombre P, le signal d'autorisation étant délivré quand le décompteur atteint le zéro, un signal de décomptage d'une unité étant appliqué au second décompteur à chaque réception par le circuit intégré d'une demande de réponse à la demande d'identification sélective.

Selon un mode de réalisation, le procédé comprend une étape de chargement du nombre P dans le second décompteur après application de N impulsions de décalage au registre à décalage et de N impulsions de lecture à la mémoire, effectuée si le comparateur ne délivre pas un signal d'inégalité.

Selon un mode de réalisation, le chargement du nombre P dans le second décompteur comprend le chargement bit à bit dans le second décompteur de L bits du code d'identification délivrés par la mémoire après application de N impulsions de lecture.

Selon un mode de réalisation, le registre à décalage est réalisé au moyen d'au moins deux registres à décalage agencés en parallèle, ayant des entrées séries reliées à un démultiplexeur et des sorties séries reliées à un multiplexeur.

Selon un mode de réalisation, le procédé est mis en oeuvre pour l'exécution d'une commande INVENTORY prévue par la norme ISO/IEC/FCD 15693-3.

La présente invention concerne également un circuit intégré comprenant un code d'identification de M bits et des moyens d'exécution d'une demande d'identification sélective accompagnée d'un code de sélection, dans lequel les moyens d'exécution comprennent un registre à décalage comprenant une sortie série reliée à une première entrée d'un comparateur logique, une mémoire série contenant le code d'identification et comportant une sortie série reliée à une deuxième entrée du comparateur et à une entrée série du registre à décalage, des moyens pour charger dans le registre à décalage un code de sélection reçu, des moyens pour appliquer M impulsions de décalage au registre à décalage et M impulsions de lecture à la mémoire, des moyens pour inhiber le comparateur quand N impulsions de décalage et de lecture ont été appliquées au registre et à la mémoire, et des moyens pour délivrer à une interface de communication du circuit intégré, à un instant déterminé, des données présentes dans le registre à décalage, si le comparateur délivre un signal d'égalité.

Selon un mode de réalisation, les moyens pour inhiber le comparateur comprennent un premier circuit de comptage agencé pour compter le nombre N en synchronisation avec les impulsions de décalage et de lecture et pour délivrer un signal d'inhibition du comparateur lorsque le nombre N est compté.

Selon un mode de réalisation, le premier circuit de comptage comprend un décompteur, des moyens pour charger le nombre N dans le décompteur, et un circuit logique pour délivrer le signal d'inhibition quand le décompteur atteint la valeur zéro.

Selon un mode de réalisation, les moyens pour inhiber le comparateur sont également agencés pour inhiber le comparateur lorsque le comparateur délivre un signal d'inégalité.

Selon un mode de réalisation, les moyens pour inhiber le comparateur sont également agencés pour inhiber le premier circuit de comptage lorsque le comparateur délivre un signal d'inégalité.

Selon un mode de réalisation, le comparateur comprend des bascules synchrones pilotées par un signal synchronisé aux impulsions de décalage et de lecture.

Selon un mode de réalisation, les moyens pour inhiber le comparateur comprennent une porte logique pour bloquer le signal de synchronisation des bascules du comparateur.

Selon un mode de réalisation, les moyens pour délivrer à l'interface de communication du circuit intégré des données présentes dans le registre à décalage comprennent : des moyens pour relier une sortie série du registre à décalage à l'interface de communication du circuit intégré lorsqu'un signal d'autorisation est délivré, des moyens pour délivrer le signal d'autorisation au plus tard lorsque l'instant déterminé est atteint, et des moyens pour empêcher la délivrance du signal d'autorisation quand la sortie du comparateur présente une valeur d'inégalité.

Selon un mode de réalisation, les moyens pour délivrer le signal d'autorisation comprennent : un second circuit de comptage agencé pour compter un nombre P, et pour délivrer le signal d'autorisation quand le nombre P est compté, et un contrôleur pour appliquer au circuit de comptage un signal de comptage d'une unité à chaque réception par le circuit intégré d'une demande de réponse à la demande d'identification sélective.

Selon un mode de réalisation, le second circuit de comptage comprend un décompteur, des moyens pour charger le nombre P dans le décompteur, et des moyens pour délivrer le signal d'autorisation quand le décompteur atteint la valeur zéro.

Selon un mode de réalisation, les moyens pour charger le nombre P dans le décompteur sont agencés pour commencer le chargement du nombre P après application de N impulsions de décalage au registre à décalage et de N impulsions de lecture à la mémoire, si le comparateur ne délivre pas un signal d'inégalité.

Selon un mode de réalisation, les moyens pour charger le nombre P dans le décompteur comprennent des moyens pour charger bit à bit L bits du code d'identification délivrés par la mémoire après N impulsions de lecture.

Selon un mode de réalisation, les moyens pour charger L bits du code d'identification dans le décompteur comprennent un compteur agencé pour compter L cycles de chargement d'un bit et des moyens pour inhiber le chargement du décompteur lorsque le nombre L est atteint.

Selon un mode de réalisation, le registre à décalage comprend également une entrée parallèle pour recevoir le code de sélection.

Selon un mode de réalisation, le registre à décalage comprend au moins deux registres à décalage en parallèle ayant des entrées séries reliées à un démultiplexeur et des sorties séries reliées à un multiplexeur.

Selon un mode de réalisation, le circuit intégré comprend une interface de communication sans contact fonctionnant par couplage inductif.

Selon un mode de réalisation, le circuit intégré est agencé pour exécuter une demande d'identification sélective INVENTORY prévue par la norme ISO/IEC/FCD 15693-3.

La présente invention concerne également un objet portatif électronique du type carte à puce, étiquette électronique ou équivalent, comprenant un circuit intégré selon l'invention.

Ces objets, caractéristiques et avantages ainsi que d'autres de la présente invention seront exposés plus en détail dans la description suivante d'un circuit intégré selon l'invention, faite à titre non limitatif en relation avec la norme ISO/IEC/FCD 15693-3 et avec les figures jointes parmi lesquelles :
- la figure 1 précédemment décrite représente une station d'émission-réception de données et plusieurs circuits intégrés sans contact,
- les figures 2A à 2D précédemment décrites illustrent la mise en oeuvre d'une demande d'identification sélective selon la norme ISO/IEC/FCD 15693-3,
- la figure 3 est le schéma bloc d'un circuit intégré comprenant une fonction à logique câblée selon l'invention pour l'exécution d'une demande d'identification sélective,
- la figure 4 est un schéma détaillé d'un élément représenté sous forme de bloc en figure 3,
- la figure 5 est un schéma détaillé d'un autre élément représenté sous forme de bloc en figure 3,
- la figure 6 est un schéma détaillé d'encore un autre élément représenté sous forme de bloc en figure 3,
- les figures 7A à 7K représentent divers signaux électriques apparaissant dans le circuit intégré de la figure 3 lors de l'exécution d'une demande d'identification sélective, et
- les figures 8A à 8M représentent divers signaux électriques apparaissant dans le circuit intégré de la figure 3 lors de l'exécution d'une demande d'identification sélective, les figures 8A à 8K étant identiques aux figures 7A à 7K mais représentées avec une échelle de temps comprimée.

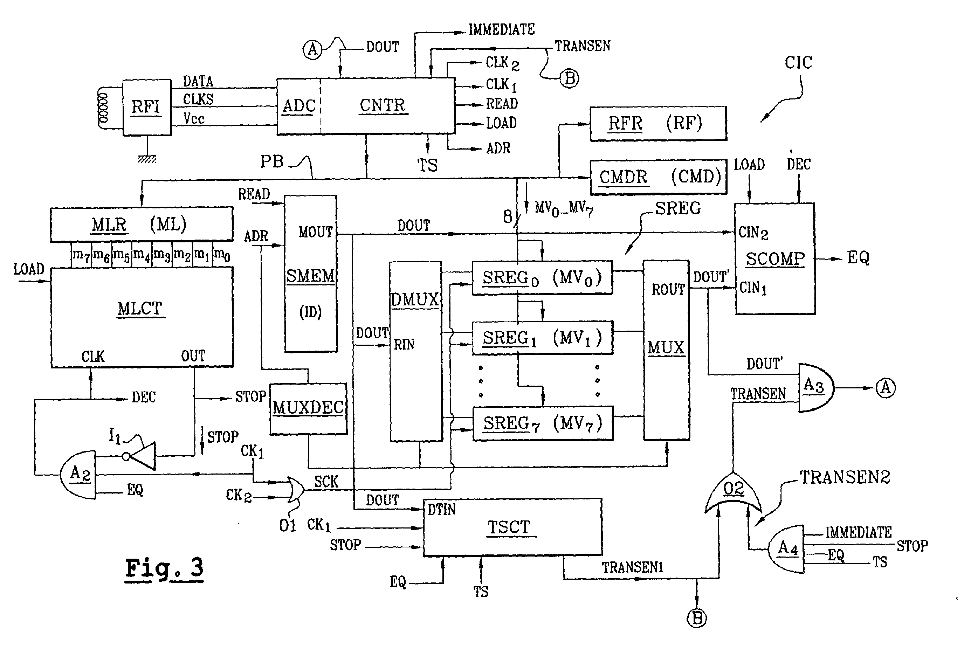

La figure 3 est le schéma d'un circuit intégré sans contact CIC selon l'invention, comprenant un circuit à logique câblée prévu pour exécuter une demande d'identification sélective accompagnée d'un code de sélection, ou masque MV. Le circuit intégré représenté ici est spécifiquement conçu pour exécuter une demande d'identification sélective selon la norme ISO/IEC/FCD 15693-3, ou commande INVENTORY, déjà décrite au préambule. Il présente ainsi certaines caractéristiques particulières prévues en relation avec cette norme, qui ne seront décrites qu'à titre non limitatif et uniquement à titre d'exemple de mise en oeuvre de l'invention.

Le circuit intégré CIC comprend de façon classique une interface de communication sans contact RFI et un contrôleur CNTR. Le contrôleur est ici un séquenceur à logique câblée ou machine d'état ("state machine"), qui délivre des signaux de commande aux divers éléments du circuit intégré. L'interface RFI est équipée d'une bobine d'antenne pour échanger par couplage inductif des données DATA avec une station d'émission-réception de données (non représentée). Les données échangées DATA sont ici codées PPM ("Pulse Position Modulation"). Elles sont transformées en octets par un décodeur/codeur ADC. L'interface RFI délivre également une tension Vcc d'alimentation du circuit intégré obtenue par redressement d'une tension induite dans sa bobine, et délivre au contrôleur CNTR un signal d'horloge CLKS extrait de la fréquence d'oscillation du champ magnétique ambiant émis par la station d'émission-réception de données.

Le circuit intégré CIC comprend classiquement divers registres pour stocker les champs d'une commande INVENTORY, notamment un registre RFR pour stocker le champ "Drapeaux de Requête" RF (8 bits), un registre CMDR pour stocker le champ "Commande" CMD (8 bits), un registre MLR pour stocker le champ "Longueur de Masque" ML (8 bits), et un registre SREG pour stocker le masque MV (0 à 8 octets). Ces registres sont ici à chargement parallèle, les données étant reçues par groupes de 8 bits en raison du codage PPM précité. Le chargement des registres est effectué par le contrôleur CNTR par l'intermédiaire d'un bus de données parallèle PB. Les divers signaux de sélection et de chargement des registres ne sont pas représentés dans un souci de simplicité. Toujours de façon classique, ces registres ont des sorties appliquées directement au contrôleur CNTR (non représentées) de manière que ce dernier exécute, en tant que machine d'état, des actions prédéfinies qui sont fonction des valeurs des champs stockés dans les registres.

Le circuit intégré CIC comprend également une mémoire SMEM présentant une sortie série MOUT, par exemple une mémoire EEPROM, dans laquelle est stocké de façon permanente le code d'identification ID du circuit intégré, d'une longueur de M bits. On considèrera ici que le code ID présente 8 octets, M étant ainsi égal à 64. La mémoire SMEM reçoit des signaux d'adresse ADR envoyés par le contrôleur CNTR et des signaux de lecture READ. Les signaux d'adresse ADR comprennent classiquement un signal de sélection de ligne de mot et un signal de sélection de colonne, non représentés et bien connus de l'homme de l'art, permettant de lire la mémoire bit à bit sur la sortie MOUT.

Selon l'invention, le registre SREG est un registre à décalage comprenant une entrée série RIN connectée à la sortie série MOUT de la mémoire et une sortie série ROUT connectée à une entrée CIN1 d'un comparateur SCOMP. Le comparateur SCOMP comporte une deuxième entrée CIN2 connectée à la sortie MOUT de la mémoire. Le registre SREG est formé ici par huit sous-registres à décalage de 8 bits chacun, respectivement SREG0, SREG1,...SREG7. Les sous-registres sont agencés en parallèle, ont leurs entrées série connectées aux sorties d'un démultiplexeur DMUX et leurs sorties série connectées aux entrées d'un multiplexeur MUX. L'entrée du démultiplexeur DMUX forme l'entrée RIN du registre SREG et la sortie du multiplexeur MUX forme la sortie ROUT du registre SREG. Les éléments MUX et DMUX sont pilotés par un décodeur MUXDEC recevant en entrée les signaux d'adresse ADR appliqués à la mémoire SMEM, et les sous-registres sont pilotés par un signal de décalage SCK délivré par la sortie d'une porte OU référencée O1. La porte O1 reçoit sur une première entrée un signal de décalage CK1 et sur une deuxième entrée un signal de décalage CK2. Le signal CK1 apparaît pendant des phases de comparaison et de chargement du registre SREG, tandis que le signal CK2 apparaît pendant des phases de réponse à une commande INVENTORY. Le signal SCK est ainsi égal au signal CK1 ou au signal CK2 selon la phase de fonctionnent en cours d'exécution.

L'ensemble formé par les sous-registres, le multiplexeur et le démultiplexeur constitue ainsi l'équivalent d'un registre à décalage "monolithique" de 64 bits. On notera que cette structure de registre à décalage est décrite à titre d'exemple non limitatif et a été retenue ici pour faciliter le chargement par octets du masque MV ("Mask Value") chaque sous-registre SREG0 à SREG7 présentant une entrée parallèle connectée au bus de données PB et recevant un octet du masque MV, respectivement des octets MV0 à MV7.

Le comparateur SCOMP est ici un comparateur synchrone piloté par un signal de synchronisation DEC. Il délivre un signal EQ ("EQUAL") égal à 1 après application sur les entrées CIN1 et CIN2 de deux chaînes de bits identiques ou égal à 0 si au moins deux bits des chaînes de bits sont différents. Un signal LOAD délivré par le contrôleur assure la mise à 1 du signal EQ avant le déclenchement d'un cycle de comparaison.

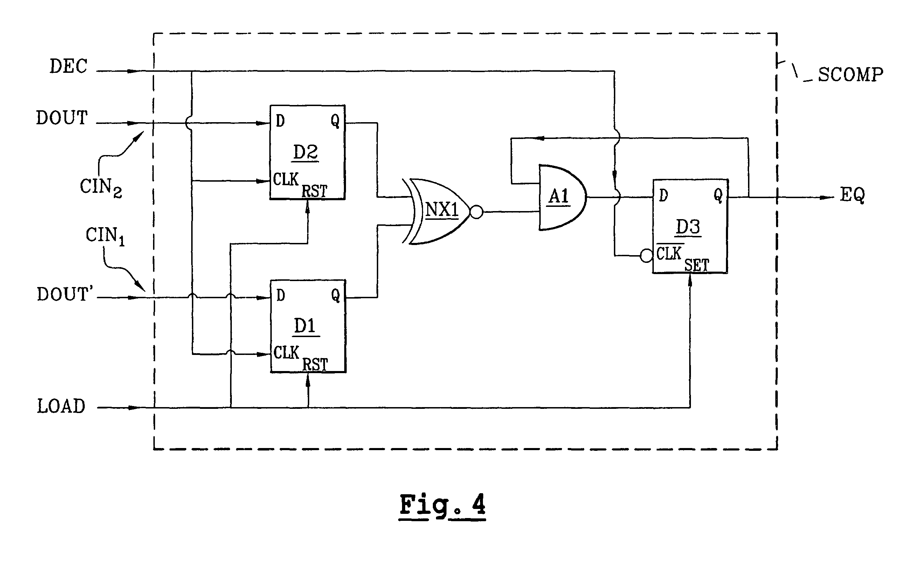

Un exemple de réalisation du comparateur est représenté en figure 4. Le comparateur comprend trois bascules D1, D2 et D3. Les entrées D des bascules D1 et D2 forment respectivement les entrées CIN1 et CIN2 du comparateur. Les sorties Q des bascules D1 et D2 sont connectées aux entrées d'une porte NON OU EXCLUSIF référencée NX1 dont la sortie est envoyée sur une entrée d'une porte ET référencée A1. La sortie de la porte A1 est connectée à l'entrée D de la bascule D3. La sortie Q de la bascule D3 forme la sortie du comparateur et délivre le signal EQ. Le signal EQ est ramené sur une deuxième entrée de la porte A1 afin de bloquer le comparateur lorsque le signal EQ passe à 0. Les bascules D1 et D2 reçoivent le signal de synchronisation DEC sur leurs entrées d'horloge CLK, tandis que la bascule D3 reçoit le signal DEC sur une entrée d'horloge inversée. Le signal LOAD est appliqué sur des entrées de remise à zéro RST des bascules D1, D2 et sur une entrée de mise à 1 SET de la bascule D3.

Ainsi, le comparateur charge deux bits reçus par les entrées CIN1, CIN2 sur front montant du signal DEC et délivre le résultat de la comparaison sur front descendant du signal DEC. La comparaison est effectuée par la porte NX1. L'application du signal EQ au comparateur met à 1 la sortie Q de la bascule D3 (signal EQ) et remet à 0 les sorties Q des bascules D1 et D2.

Si l'on se réfère à nouveau à la figure 3, on voit que le signal DEC est délivré par la sortie d'une porte A2 de type ET qui reçoit en entrée le signal EQ, le signal CK1 mentionné plus haut et un signal NSTOP délivré par une porte inverseuse I1 recevant en entrée un signal STOP.

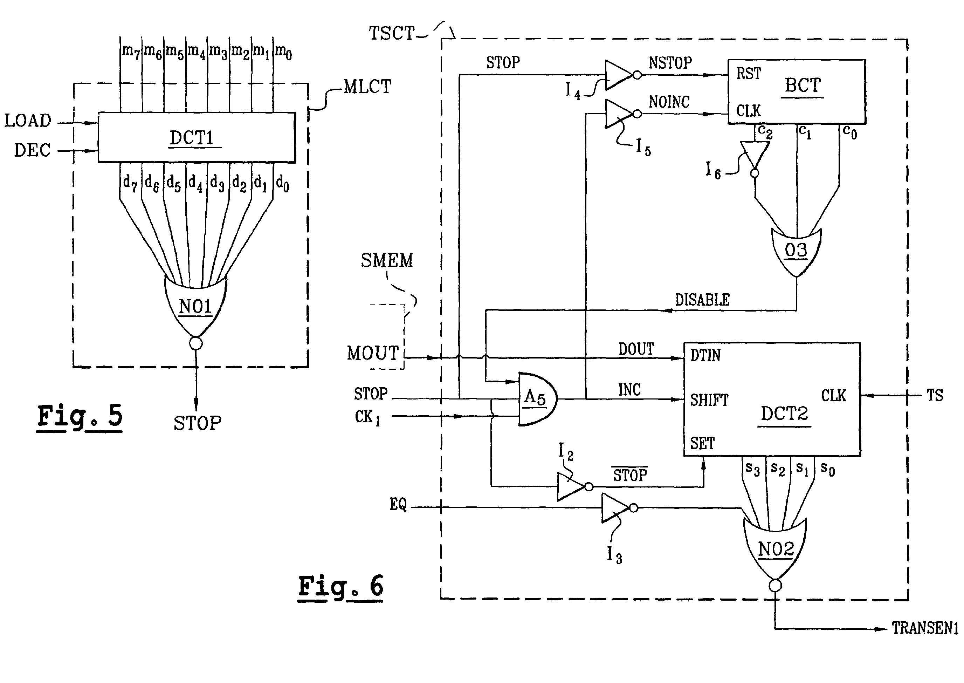

Le signal STOP est délivré par un circuit de comptage MLCT, présentant huit entrées m0-m7 reliées à des sorties correspondantes du registre MLR. Le circuit de comptage MLCT, représenté plus en détail sur la figure 5, comprend un décompteur DCT1 à chargement parallèle, dont les entrées forment les entrées m0-m7 du circuit MLCT, et huit sorties d0-d7 connectées aux entrées d'une porte NON OU référencée NO1. La sortie de la porte NO1 délivre le signal STOP. Le chargement dans le décompteur DCT1 de champ "longueur de masque" ML présent dans le registre MLR est assuré par le signal LOAD, et le signal DEC est appliqué sur l'entrée d'horloge CLK du décompteur DCT1 en tant que signal de décomptage.

Le circuit à logique câblée selon l'invention fonctionne ainsi comme suit. Après réception d'une commande INVENTORY, les champs de la commande sont chargés dans leurs registres respectifs par le contrôleur : le masque MV est chargé dans le registre SREG, le champ commande CMD est chargé dans le registre CMDR, le champ RF est chargé dans le registre RFR et le champ ML est chargé dans le registre MLR. Après avoir décodé le champ "commande" CMD, le contrôleur déclenche une séquence de comparaison de N bits du masque MV avec N bits du code ID présent dans la mémoire SMEM, le nombre N de bits à comparer étant défini par le champ "longueur de masque" ML.

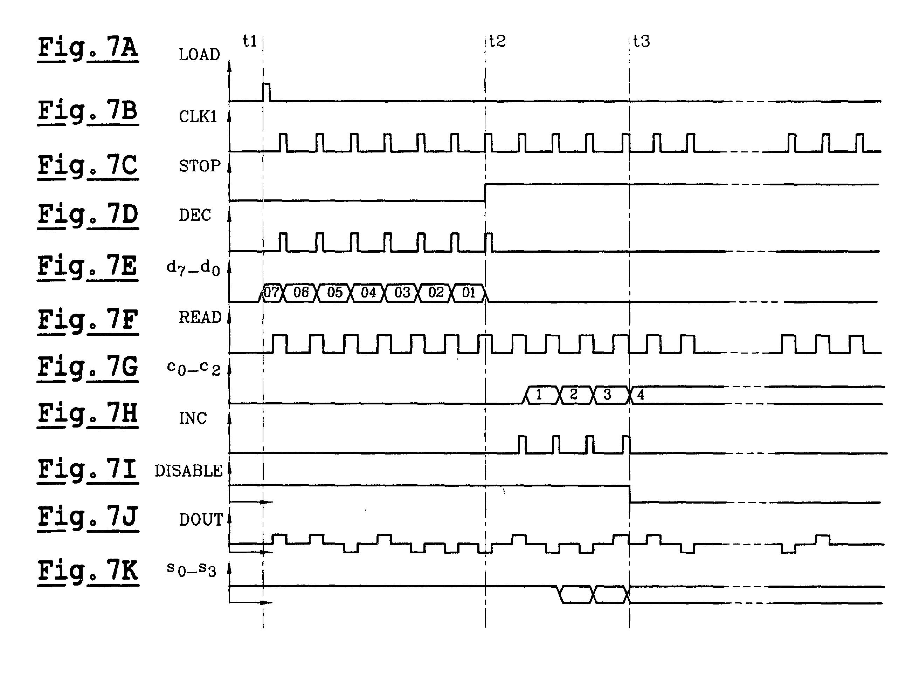

Cette séquence de comparaison est illustrée par les figures 7A à 7F, qui représentent respectivement le signal LOAD, le signal CK1, le signal STOP, le signal DEC, les signaux d0-d7 à la sortie du décompteur DCT1 (circuit de comptage MLCT), et le signal READ. Les données DOUT délivrées par la mémoire SMEM (bits du code ID) sont représentées en figure 7J. On considère dans cet exemple que N = 7 (soit un champ ML égal à "00000111" dans le registre MLR).

Pour initialiser la séquence de comparaison, le contrôleur met tout d'abord le signal LOAD à 1 (fig. 7A) à un instant t1. Ainsi, le comparateur SCOMP est remis à zéro et le champ ML est chargé dans le circuit de comptage MLCT. Le contrôleur émet ensuite une suite d'impulsions de lecture READ et de décalage CK1 qui sont synchrones (fig. 7B et 7F), chaque impulsion READ apparaissant sensiblement avant chaque impulsion CK1 pour tenir compte du temps de lecture d'un bit dans la mémoire SMEM. A chaque nouvelle impulsion READ, le contrôleur incrémente d'une unité l'adresse ADR appliquée à la mémoire SMEM, la première adresse appliquée étant l'adresse du bit de plus faible poids du code ID. L'adresse ADR détermine également le sous-registre qui est sélectionné dans le registre SREG, grâce au décodeur MUXDEC.

Tant que le signal STOP est à 0, la porte A2 est passante et le signal DEC recopie le signal CK1 (fig. 7D) en activant le comparateur SCOMP et le circuit de comptage MLCT. Ainsi, les bits du masque MV sont reçus les uns après les autres par l'entrée CIN1 du comparateur tandis que les bits du code ID sont reçus par l'entrée CIN2. Pendant cette étape de comparaison, les bits du code ID sont également présents sur l'entrée RIN du registre SREG et pénètrent dans le registre, en remplaçant progressivement les bits du masque MV, qui sont délivrés par la sortie ROUT et sont donc "évacués" du registre SREG.

Si à un instant donné deux bits des codes ID et MV sont différents, le signal EQ passe à 0 et bloque la porte A2, de sorte que le signal DEC n'est plus appliqué au circuit de comptage MLCT ni au comparateur SCOMP. Le circuit à logique câblée reste alors bloqué jusqu'à réception d'un nouveau signal LOAD égal à 1, qui ne sera émis qu'après réception, le cas échéant, d'une nouvelle commande INVENTORY.

Si par contre les N bits du code ID sont identiques aux N bits du masque MV, le cycle de comparaison se termine à un instant t2 lorsque le décompteur DCT1 atteint la valeur 0 (fig. 7E), le signal STOP passant à 1 (fig. 7C). La porte A2 se bloque et le signal DEC (fig. 7D) n'est plus appliqué au circuit de comptage MLCT ni au comparateur SCOMP. Le signal EQ est maintenu à 1 par la bascule D3 du comparateur.

Après l'instant t2, le contrôleur continue d'appliquer des impulsions de lecture READ à la mémoire (fig. 7F) et des impulsions de décalage CK1 (fig. 7F) au registre SREG, de sorte que les M-N bits restant du code ID sont chargés dans le registre SREG. Le nombre M-N d'impulsions à appliquer est connu par le contrôleur puisque la longueur M du code ID est prédéfinie dans le circuit intégré.

Ainsi, selon l'invention, deux opérations sont réalisées en même temps : la comparaison bit à bit du masque MV avec le code ID et le chargement des N premiers bits du code ID dans le registre SREG. Outre un gain de temps non négligeable dans le chargement du code ID dans le registre SREG, l'avantage de cet agencement d'éléments est que le registre SREG est utilisé à la fois comme tampon de réception du masque MV pour sa comparaison avec le code ID, et comme tampon de stockage du code ID pour l'émission d'une réponse à une demande d'identification.

Pour l'émission du code ID à partir du registre SREG, la sortie ROUT du registre est connectée au décodeur/codeur ADC du contrôleur CNTR par l'intermédiaire d'une porte ET référencée A3, recevant sur une autre entrée un signal d'autorisation de transmission TRANSEN ("Transmit Enable") qui passe à 1 au plus tard lorsque la position de réponse à la commande INVENTORY est atteinte.

Selon un aspect de l'invention apparaissant en figure 3, la position de réponse est déterminée par un circuit de comptage TSCT délivrant un signal TRANSEN1 appliqué à une porte OU référencée 02, dont la sortie délivre le signal TRANSEN. Ce circuit de comptage fonctionne de préférence en décompteur et effectue un compte à rebours à partir d'un nombre P qui lui est fourni. Il reçoit en entrée le signal STOP et reste bloqué tant que le signal STOP n'est pas à 1. Il reçoit également en entrée le signal EQ et reste bloqué quand le signal EQ est à 0, car aucune réponse ne doit être envoyée si le résultat de la comparaison entre les N bits du code ID et les N bits du masque MV n'est pas positif.

Le décomptage effectué par le circuit TSCT est cadencé par des impulsions TS ("Time Slot") délivrées par le contrôleur chaque fois que celui-ci reçoit une demande de réponse à la commande INVENTORY (champ de fin de trame "EOF", Cf. fig. 2D) et le signal TRANSEN1 passe à 1 lorsque P impulsions TS ont été appliquées au circuit TSCT.

D'autre part, comme cela est rappelé au préambule, le champ RF ("Request Flag") de la commande INVENTORY peut spécifier (quand le bit 5 est à 1) que la réponse d'identification doit, le cas échéant, être émise sur la première position de réponse. Cette éventualité est traitée ici par la prévision d'une porte ET référencée A4 qui reçoit en entrée les signaux STOP et EQ ainsi qu'un signal IMMEDIATE. La porte A4 délivre un signal TRANSEN2 appliqué sur une deuxième entrée de la porte 02. Le signal IMMEDIATE est délivré par le contrôleur et est mis automatiquement à 1 si le bit 5 du champ RF est égal à 1 dans le registre RFR.

Ainsi, trois cas peuvent se produire sur réception par le contrôleur de la première demande de réponse (EOF). Si le bit 5 du champ RF est égal à 1, le contrôleur met à 1 le signal IMMEDIATE et envoie une réponse contenant le code ID présent dans le registre SREG. Si le bit 5 est égal à 0 et le signal TRANSEN1 égal à 1 (P=0), le contrôleur procède également à l'envoi d'une réponse contenant le code ID. Enfin, si le bit 5 et le signal TRANSEN1 sont tous deux égaux à 0, le contrôleur applique une impulsion de décomptage TS au circuit TSCT.

Lorsqu'une nouvelle demande de réponse est reçue, le contrôleur envoie une réponse contenant le code ID si le signal TRANSEN1 est à 1, sinon applique une impulsion TS au circuit TSCT.

Pour envoyer une réponse contenant le code ID, le contrôleur balaye en M cycles les adresses ADR des bits du code ID en appliquant des signaux de décalage CK2 au registre SREG sans appliquer les signaux READ à la mémoire SMEM, qui reste ainsi inactive. En conséquence, les bits du code ID sont lus dans le registre SREG au rythme du signal CK2 et sont appliqués via la porte A3 au décodeur/codeur ADC, avant d'être envoyés à l'interface RFI.

Dans une variante de réalisation, une lecture parallèle du code ID par le contrôleur, faite octet par octet par l'intermédiaire du bus PB, peut être prévue.

On décrira maintenant un mode de réalisation particulier du circuit de comptage TSCT, prévu en relation avec la norme ISO/IEC/FCD 15693-3. Il convient de noter ici que le nombre P fourni au circuit de comptage TSCT peut en pratique être déterminé de diverses manières et être par exemple un nombre aléatoire ou un nombre peuso-aléatoire fonction de données présentes dans le circuit intégré. Toutefois, dans le cadre de la norme précitée, le nombre P est défini par les quatre bits du code ID qui suivent immédiatement les N bits comparés aux bits du masque MV. Le mode de réalisation du circuit TSCT représenté sur la figure 6 est prévu en relation avec cette caractéristique.

Le circuit TSCT comprend un décompteur DCT2 et un compteur BCT. Le décompteur DCT2 est un décompteur par 16 à chargement série, comprenant une entrée de données DTIN et une entrée SHIFT pour cadencer un chargement bit à bit. Il comprend également une entrée SET de mise à 1 de son contenu (nombre P), une entrée d'horloge CLK pour le décomptage et quatre sorties s0-s3. L'entrée d'horloge CLK reçoit le signal pulsé TS et l'entrée DTIN est connectée à la sortie MOUT de la mémoire. L'entrée SHIFT est pilotée par un signal INC délivré par une porte ET référencée A5, recevant en entrée les signaux STOP et CK1 ainsi qu'un signal DISABLE. L'entrée SET reçoit l'inverse du signal STOP, par l'intermédiaire d'une porte inverseuse 12. Les sorties s0-s3 sont envoyées sur des entrées d'une porte NON OU référencée NO2. La porte NO2 délivre le signal TRANSEN1 et reçoit sur une cinquième entrée un signal inverse du signal EQ, délivré par une porte inverseuse I3.

Le compteur BCT est un compteur par 8 comprenant une entrée de remise à zéro RST, une entrée d'horloge CLK et trois sorties c0-c2. L'entrée RST reçoit un signal NSTOP délivré par une porte inverseuse I4 recevant le signal STOP en entrée. L'entrée CLK reçoit un signal NOINC délivré par une porte inverseuse I5 recevant le signal INC en entrée. Les sorties c0 et c1 sont appliquées sur deux entrées d'une porte OU référencée 03 et la sortie c2 est appliquée sur une troisième entrée de la porte 03 par l'intermédiaire d'une porte inverseuse I6. La porte 03 délivre le signal DISABLE.

Le fonctionnement du circuit TSCT est illustré par les figures 7G, 7H, 7I et 7K, qui représentent respectivement les sorties c2-c0, le signal INC, le signal DISABLE et les sorties s3-s0. A l'instant t2 mentionné plus haut, la phase de comparaison est terminée et le signal STOP passe à 1 (fig. 7C), ce qui remet à zéro le compteur BCT et met à 1 le signal DISABLE, quelle que soit sa valeur précédente ("1" en figure 7I). La porte A5 devient passante et laisse passer les impulsions CK1 délivrées par le contrôleur, qui parviennent à l'entrée SHIFT du décompteur DCT2. Ainsi, les bits délivrés par la sortie MOUT de la mémoire sont chargés dans le décompteur DCT2 (entrée DTIN), parallèlement à leur chargement dans le registre SREG. Le signal NOINC recopie également les impulsions CK1 et le compteur BCT s'incrémente d'une unité après chaque chargement d'un bit dans le décompteur DCT2 lorsque les impulsions CK1 présentent un front descendant.

A un instant t3, lorsque quatre bits ont été chargés dans le décompteur DCT2, la sortie du compteur BCT devient égale à 4 ("100") et le signal DISABLE passe à 0 (fig. 7I). Le signal DISABLE à 0 bloque la porte A5 et rend impossible tout autre chargement de bits dans le décompteur DCT2 et tout autre incrémentation du compteur BCT. Le chargement des quatre bits du code ID est alors terminé et le décompteur DCT2 est prêt à recevoir sur son entrée CLK des impulsions de décomptage TS envoyées par le contrôleur sur réception de demandes de réponse EOF.

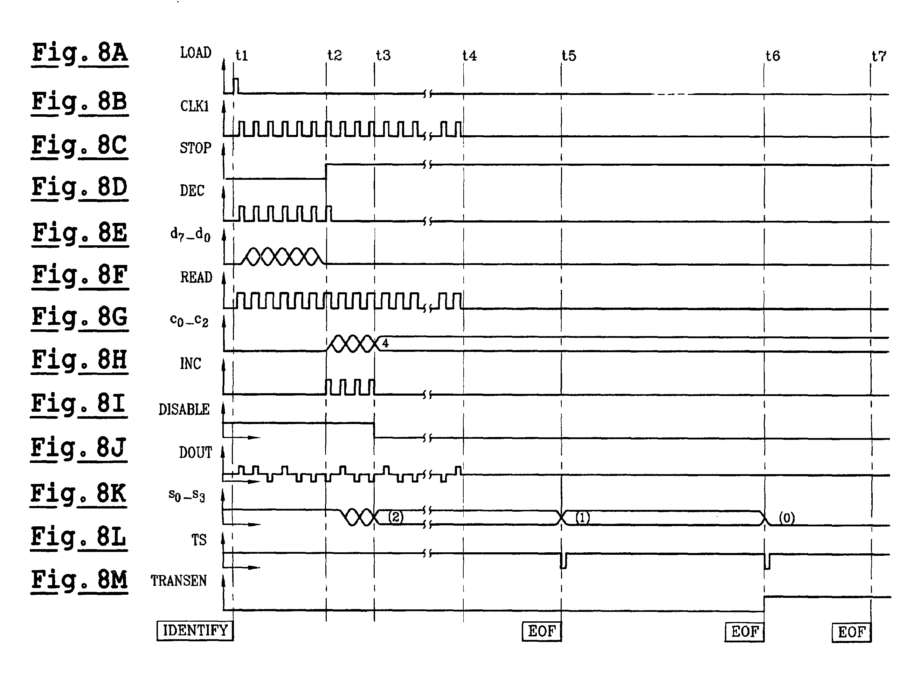

Les figures 8A à 8M illustrent le fonctionnement général du circuit à logique câblée selon l'invention. Les figures 8A à 8K sont identiques aux figures 7A à 7K et représentent les mêmes signaux sur une échelle de temps comprimée. La figure 8L représente le signal pulsé TS et la figure 8M le signal TRANSEN. On distingue sur ces figures la phase de comparaison de N bits, qui s'étend entre les instants t1 et t2, la phase de chargement de quatre bits de code ID dans le circuit TSCT, qui s'étend entre les instants t2 et t3, et la phase de chargement dans le registre SREG des M-N bits restant du code ID, qui s'étend entre l'instant t2 et un instant t4. Après l'instant t4, le circuit est au repos et le contrôleur attend la première demande de réponse EOF.

On suppose ici que le nombre P représenté par les quatre bits du code ID chargé dans le circuit TSCT est égal à 2 et que le champ RF n'est pas égal à zéro. Cela signifie que la réponse devra être envoyée, le cas échéant, sur une troisième position de réponse TS2, après des positions de réponse TS0 et TS1.

A un instant t5, la première demande de réponse est reçue (position de réponse TS0) et le contrôleur applique une impulsion TS au circuit TSCT (fig. 8L) car le signal TRANSEN n'est pas égal à 1. La sortie du circuit TSCT passe de P=2 à P=1 (fig. 8K) et le signal TRANSEN reste à 0. A un instant t6, une deuxième demande de réponse est reçue (position de réponse TS1) et le contrôleur applique une nouvelle impulsion TS au circuit TSCT. La sortie du décompteur passe de P=1 à P=0 et le signal TRANSEN passe à 1 (fig. 8M). La porte A3 (fig. 3) devient passante, libérant le chemin de données entre la sortie du registre SREG et l'interface de communication RFI. La réponse est envoyée à un instant t7, à réception d'une troisième demande de réponse.

De façon générale, la présente invention est applicable à l'exécution de divers types de demandes d'identification sélective répondant à divers protocoles autres que celui prévu par la norme ISO/IEC/FCD 15693-3, moyennant une adaptation à la portée de l'homme de l'art de l'architecture de circuit décrite ci-dessus. La présente invention est également applicable à l'exécution de demandes d'identification sélectives personnalisées prévues dans des applications où aucune norme ne s'applique.

## Revendications

1. Circuit intégré (CIC) comprenant un code d'identification (ID) de M bits et des moyens d'exécution d'une demande d'identification sélective (INVENTORY) accompagnée d'un code de sélection (MV) de N bits, **caractérisé en ce que** les moyens d'exécution comprennent :
- un registre à décalage (SREG) comprenant une sortie série (ROUT) reliée à une première entrée (CIN1) d'un comparateur logique (SCOMP),
- une mémoire série (SMEM) contenant le code d'identification (ID) et comportant une sortie série (MOUT) reliée à une deuxième entrée (CIN2) du comparateur et à une entrée série (RIN) du registre à décalage,
- des moyens (CNTR) pour charger dans le registre à décalage (SREG) un code de sélection reçu (MV),
- des moyens (CNTR) pour appliquer M impulsions de décalage (CK1) au registre à décalage et M impulsions de lecture (READ) à la mémoire,
- des moyens (MLCT, A2) pour inhiber le comparateur quand N impulsions de décalage et de lecture ont été appliquées au registre et à la mémoire, et
- des moyens pour délivrer à une interface de communication (ADC, RFI) du circuit intégré, à un instant déterminé (t7), les données présentes dans le registre à décalage, si le comparateur délivre un signal d'égalité (EQ=1).

2. Circuit intégré selon la revendication 1, dans lequel les moyens pour inhiber le comparateur comprennent un premier circuit de comptage (MLCT) agencé pour compter le nombre N en synchronisation avec les impulsions de décalage (CK1) et de lecture (READ) et pour délivrer un signal (STOP) d'inhibition du comparateur lorsque le nombre N est compté.

3. Circuit intégré selon la revendication 2, dans lequel le premier circuit de comptage (MLCT) comprend :
- un décompteur (DCT1),
- des moyens (CNTR, LOAD) pour charger le nombre N (ML) dans le décompteur, et
- un circuit logique (NO1) pour délivrer le signal d'inhibition (STOP) quand le décompteur atteint la valeur zéro.

4. Circuit intégré selon l'une des revendications 2 et 3, dans lequel les moyens (A2, EQ) pour inhiber le comparateur sont également agencés pour inhiber le comparateur lorsque le comparateur délivre un signal d'inégalité (EQ=0).

5. Circuit intégré selon l'une des revendications 2 à 4, dans lequel les moyens (MLCT, A2) pour inhiber le comparateur sont également agencés pour inhiber le premier circuit de comptage (MLCT) lorsque le comparateur délivre un signal d'inégalité (EQ=0).

6. Circuit intégré selon l'une des revendications 2 à 5, dans lequel le comparateur comprend des bascules synchrones (D1, D2, D3) pilotées par un signal (DEC) synchronisé aux impulsions de décalage (CK1) et de lecture (READ).

7. Circuit intégré selon la revendication 6, dans lequel les moyens pour inhiber le comparateur comprennent une porte logique (A2) pour bloquer le signal de synchronisation (DEC) des bascules du comparateur.

8. Circuit intégré selon l'une des revendications 1 à 7, dans lequel les moyens pour délivrer à l'interface de communication du circuit intégré des données présentes dans le registre à décalage comprennent :
- des moyens (CNTR, TRANSEN, A3) pour relier une sortie série du registre à décalage à l'interface de communication (ADC, RFI) du circuit intégré lorsqu'un signal d'autorisation (TRANSEN) est délivré,
- des moyens (TSCT) pour délivrer le signal d'autorisation (TRANSEN) au plus tard lorsque l'instant déterminé est atteint, et
- des moyens (NO2, I3) pour empêcher la délivrance du signal d'autorisation quand la sortie du comparateur présente une valeur d'inégalité.

9. Circuit intégré selon la revendication 8, dans lequel les moyens pour délivrer le signal d'autorisation comprennent :
- un second circuit de comptage (TSCT) agencé pour compter un nombre P (ML), et pour délivrer le signal d'autorisation quand le nombre P est compté, et
- un contrôleur (CNTR) pour appliquer au circuit de comptage un signal (TS) de comptage d'une unité à chaque réception par le circuit intégré d'une demande de réponse (EOF) à la demande d'identification sélective.

10. Circuit intégré selon la revendication 9, dans lequel le second circuit de comptage (TSCT) comprend :
- un décompteur (DCT2),
- des moyens (CNTR, A5, CK1) pour charger le nombre P dans le décompteur, et
- des moyens (NO2) pour délivrer le signal d'autorisation (TRANSEN) quand le décompteur atteint la valeur zéro.

11. Circuit intégré selon la revendication 10, dans lequel les moyens pour charger le nombre P dans le décompteur sont agencés pour commencer le chargement du nombre P après application de N impulsions de décalage (CK1) au registre à décalage et de N impulsions de lecture (READ) à la mémoire, si le comparateur ne délivre pas un signal d'inégalité (EQ=0).

12. Circuit intégré selon l'une des revendications 10 et 11, dans lequel les moyens pour charger le nombre P dans le décompteur comprennent des moyens pour charger bit à bit L bits du code d'identification (ID) délivrés par la mémoire (SMEM) après N impulsions de lecture.

13. Circuit intégré selon la revendication 12, dans lequel les moyens pour charger L bits du code d'identification dans le décompteur comprennent un compteur (BCT) agencé pour compter L cycles de chargement d'un bit et des moyens (A5) pour inhiber le chargement du décompteur (DCT2) lorsque le nombre L est atteint.

14. Circuit intégré selon l'une des revendications 1 à 13, dans lequel le registre à décalage (SREG) comprend également une entrée parallèle pour recevoir le code de sélection (MV, MVO-MV7).

15. Circuit intégré selon l'une des revendications 1 à 14, dans lequel le registre à décalage (SREG) comprend au moins deux registres à décalage (SREG0-SREG7) en parallèle ayant des entrées séries reliées à un démultiplexeur (DMUX) et des sorties séries reliées à un multiplexeur (MUX).

16. Circuit intégré selon l'une des revendications 1 à 15, comprenant une interface de communication sans contact (RFI) fonctionnant par couplage inductif.

17. Circuit intégré selon l'une des revendications 1 à 16, agencé pour exécuter une demande d'identification sélective INVENTORY prévue par la norme ISO/IEC/FCD 15693-3.

18. Objet portatif électronique du type carte à puce, étiquette électronique ou équivalent, comprenant un circuit intégré selon l'une des revendications 1 à 17.

19. Procédé pour exécuter, dans un circuit intégré (CIC) auquel est attribué un code d'identification (ID) de M bits, une demande d'identification sélective (INVENTORY) accompagnée d'un code de sélection (MV) de N bits, **caractérisé en ce qu'**il comprend les étapes suivantes :
- prévoir un registre à décalage (SREG), une mémoire série (SMEM) et un comparateur logique (SCOMP),
- stocker le code d'identification (ID) du circuit intégré dans la mémoire série,
- charger le code de sélection reçu (MV) dans le registre à décalage,
- relier une sortie série (ROUT) du registre à décalage à une première entrée (CIN1) d'un comparateur logique,
- relier une sortie série (MOUT) de la mémoire à une deuxième entrée (CIN2) du comparateur et à une entrée série (RIN) du registre à décalage,
- appliquer M impulsions de décalage au registre à décalage et M impulsions de lecture à la mémoire,
- inhiber le comparateur quand N impulsions de décalage et de lecture ont été appliquées au registre et à la mémoire, et
- délivrer à une interface de communication (ADC, RFI) du circuit intégré, à un instant déterminé (t7), les données présentes dans le registre à décalage, si le comparateur délivre un signal d'égalité (EQ).

20. Procédé selon la revendication 19, comprenant une étape de décomptage du nombre N au moyen d'un premier décompteur (MLCT, DCT1) dans lequel le nombre N (ML) est chargé, et une étape de délivrance d'un signal (STOP) d'inhibition du comparateur quand le zéro est atteint.

21. Procédé selon l'une des revendications 19 et 20, comprenant une étape d'inhibition anticipée du comparateur quand le comparateur délivre un signal d'inégalité (EQ=0).

22. Procédé selon l'une des revendications 19 à 22, dans lequel l'étape de délivrance à l'interface de communication de données présentes dans le registre à décalage comprend la connexion d'une sortie (ROUT) du registre à décalage à l'interface de communication du circuit intégré (ADC, RFI) lorsqu'un signal d'autorisation (TRANSEN) est délivré, et la délivrance du signal d'autorisation (TRANSEN=1) au plus tard lorsque l'instant déterminé est atteint, sauf si le comparateur délivre un signal d'inégalité (EQ=0).

23. Procédé selon la revendication 22, dans lequel le signal d'autorisation est délivré au moyen d'un second décompteur (TSCT, DCT2) prévu pour compter un nombre P, le signal d'autorisation étant délivré quand le décompteur atteint le zéro, un signal de décomptage d'une unité (ST) étant appliqué au second décompteur à chaque réception par le circuit intégré d'une demande de réponse (EOF) à la demande d'identification sélective.

24. Procédé selon la revendication 23, comprenant une étape de chargement du nombre P dans le second décompteur après application de N impulsions de décalage au registre à décalage et de N impulsions de lecture à la mémoire, effectuée si le comparateur ne délivre pas un signal d'inégalité (EQ=0).

25. Procédé selon la revendication 24, dans lequel le chargement du nombre P dans le second décompteur comprend le chargement bit à bit dans le second décompteur de L bits du code d'identification (ID) délivrés par la mémoire après application de N impulsions de lecture (READ).

26. Procédé selon l'une des revendications 20 à 25, dans lequel le registre à décalage est réalisé au moyen d'au moins deux registres à décalage (SREG0-SREG7) agencés en parallèle, ayant des entrées séries reliées à un démultiplexeur (DMUX) et des sorties séries (MUX) reliées à un multiplexeur.

27. Procédé selon l'une des revendications 20 à 26, mis en oeuvre pour l'exécution d'une commande INVENTORY prévue par la norme ISO/IEC/FCD 15693-3.

## Claims

1. Integrated circuit (CIC) comprising an identification code (ID) of M bits and means for executing a selective identification request (INVENTORY) together with a selection code (MV) of N bits, **characterized in that** the means for executing comprise:
- a shift register (SREG) comprising a serial output (ROUT) connected to a first input (CIN1) of a logical comparator (SCOMP),
- a series memory (SMEM) containing the identification code (ID) and having a serial output (MOUT) connected to a second input (CIN2) of the comparator and to a serial input (RIN) of the shift register,
- means (CNTR) for loading into the shift register (SREG) a selection code received (MV),
- means (CNTR) for inputting M shift pulses (CK1) to the shift register and M read pulses (READ) to the memory,
- means (MLCT, A2) for inhibiting the comparator when N shift and read pulses have been input to the register and the memory, and
- means for outputting to a communication interface (ADC, RFI) for the integrated circuit, at a pre-determined time (t7), the data contained in the shift register, if the comparator outputs an equal signal (EQ=1).

2. Integrated circuit in accordance with claim 1, in which the means for inhibiting the comparator comprise a first counting circuit (MLCT) arranged to count the number N in synchronisation with the shift (CK1) and read (READ) pulses and to output an inhibition signal (STOP) for the comparator when the number N is counted.

3. Integrated circuit in accordance with claim 2, in which the first counting circuit (MLCT) comprises:
- a count-down counter (DCT1),
- means (CNTR, LOAD) for loading the number N (ML) into the count-down counter, and
- a logical circuit (NO1) for outputting the inhibition signal (STOP) when the count-down counter reaches the value zero.

4. Integrated circuit in accordance with either of the claims 2 and 3, in which the means (A2, EQ) for inhibiting the comparator are also arranged to inhibit the comparator when the comparator outputs a not-equal signal (EQ=0).

5. Integrated circuit in accordance with any of the claims 2 to 4, in which the means (MLCT, A2) for inhibiting the comparator are also arranged to inhibit the first counting circuit (MLCT) when the comparator outputs a not-equal signal (EQ=0).

6. Integrated circuit in accordance with any of the claims 2 to 5, in which the comparator comprises synchronous flip flops (D1, D2, D3) controlled by a signal (DEC) synchronised with the shift (CK1) and read (READ) pulses.

7. Integrated circuit in accordance with claim 6, in which the means for inhibiting the comparator comprise a logic gate (A2) to block the comparator flip flop synchronisation signal (DEC).

8. Integrated circuit in accordance with any of the claims 1 to 7, in which the means for providing the communication interface for the integrated circuit with the data contained in the shift register comprise:
- means (CNTR, TRANSEN, A3) for connecting a shift register serial output to the integrated circuit communication interface (ADC, RFI) when an authorisation signal (TRANSEN) is output,
- means (TSCT) for outputting the authorisation signal (TRANSEN) at the latest when the pre-determined time is reached, and
- means (NO2, I3) for preventing the output of the authorisation signal when the comparator output shows a not-equal value.

9. Integrated circuit in accordance with claim 8, in which the means for outputting the authorisation signal comprise:
- a second counting circuit (TSCT) arranged to count a number P (ML), and for outputting the authorisation signal when the number P is counted, and
- a controller (CNTR) to input to the counting circuit a unit count signal (TS) on each receipt by the integrated circuit of a request for a response (EOF) to the selective identification request.

10. Integrated circuit in accordance with claim 9, in which the second counting circuit (TSCT) comprises:
- a count-down counter (DCT2),
- means (CNTR, A5, CK1) for loading the number P into the count-down counter, and
- means (NO2) for outputting the authorisation signal (TRANSEN) when the count-down counter reaches the value zero.

11. Integrated circuit in accordance with claim 10, in which the means for loading the number P into the count-down counter are arranged to start loading the number P after the input of N shift pulses (CK1) to the shift register and N read pulses (READ) to the memory, if the comparator does not output a not-equal signal (EQ=0).

12. Integrated circuit in accordance with either of the claims 10 and 11, in which the means for loading the number P into the count-down counter comprise means for loading bit by bit L bits of the identification code (ID) output by the memory (SMEM) after N read pulses.

13. Integrated circuit in accordance with claim 12, in which the means for loading L bits of the identification code into the count-down counter comprise a counter (BCT) arranged to count L cycles of loading a bit and means (A5) for inhibiting loading the count-down counter (DCT2) when the number L is reached.

14. Integrated circuit in accordance with any of the claims 1 to 13, in which the shift register (SREG) comprises also a parallel input to receive the selection code (MV, MV0-MV7).

15. Integrated circuit in accordance with any of the claims 1 to 14, in which the shift register (SREG) comprises at least two shift registers (SREGO-SREG7) in parallel having serial inputs connected to a demultiplexer (DMUX) and serial outputs connected to a multiplexer (MUX).

16. Integrated circuit in accordance with any of the claims 1 to 15, comprising a contactless communication interface (RFI) operating by inductive coupling.

17. Integrated circuit in accordance with any of the claims 1 to 16, arranged to execute a selective identification request INVENTORY provided for in standard ISO/IEC/FCD 15693-3.

18. Portable electronic device of the smart card, electronic label or equivalent type, comprising an integrated circuit in accordance with any of the claims 1 to 17.

19. Method for executing, in an integrated circuit (CIC) to which is attributed an identification code (ID) of M bits, a selective identification request (INVENTORY) together with a selection code (MV) of N bits, **characterized in that** it comprises the steps of:
- providing a shift register (SREG), a series memory (SMEM) and a logical comparator (SCOMP),
- storing the identification code (ID) for the integrated circuit in the series memory,
- loading the selection code received (MV) into the shift register 15,
- connecting a serial output (ROUT) of the shift register to a first input (CIN1) of a logical comparator,
- connecting a serial output (MOUT) of the memory to a second input (CIN2) of the comparator and to a serial input (RIN) of the shift register,
- inputting M shift pulses to the shift register and M read pulses to the memory,
- inhibiting the comparator when N shift and read pulses have been input to the register and to the memory, and
- outputting to a communication interface (ADC, RFI) for the integrated circuit, at a pre-determined time (t7), the data contained in the shift register, if the comparator outputs an equal signal (EQ).

20. Method in accordance with claim 19, comprising a step of counting down the number N through a first count-down counter (MLCT, DCT1) into which the number N (ML) is loaded, and a step for outputting a comparator inhibition signal (STOP) when zero is reached.

21. Method in accordance with either of the claims 19 and 20, comprising an anticipated inhibition step for the comparator when the comparator outputs a not-equal signal (EQ=0).

22. Method in accordance with any of the claims 19 to 22, in which the step of outputting to the communication interface data contained in the shift register comprises the connection of an output (ROUT) of the shift register to the communication interface for the integrated circuit (ADC, RFI) when an authorisation signal (TRANSEN) is output, and the output of the authorisation signal (TRANSEN=1) at the latest when the pre-determined time is reached, except if the comparator outputs a not-equal signal (EQ=0).

23. Method in accordance with claim 22, in which the authorisation signal is output through a second count-down counter (TSCT, DCT2) provided to count a number P, the authorisation signal being output when the count-down counter reaches zero, a unit count-down signal (ST) being input to the second count-down counter on each receipt by the integrated circuit of a request for a response (EOF) to the selective identification request.

24. Method in accordance with claim 23, comprising a step of loading the number P into the second count-down counter after the input of N shift pulses to the shift register and N read pulses to the memory, carried out if the comparator does not output a not-equal signal (EQ=0).

25. Method in accordance with claim 24, in which loading the number P into the second count-down counter comprises loading bit by bit into the second count-down counter of L bits of the identification code (ID) output by the memory after the input of N read pulses (READ).

26. Method in accordance with any of the claims 20 to 25, in which the shift register is implemented with at least two shift registers (SREGO-SREG7) arranged in parallel, having serial inputs connected to a demultiplexer (DMUX) and serial outputs (MUX) connected to a multiplexer.

27. Method in accordance with any of the claims 20 to 26, implemented for the execution of an INVENTORY command provided for in standard ISO/IEC/FCD 15693-3.

## Patentansprüche

1. Integrierte Schaltung (CIC), die einen Identifikationscode (ID) mit M Bits und Mittel zur Ausführung einer selektiven Identifikationsanfrage (INVENTORY), begleitet von einem Selektionscode (MV) mit N Bits, umfasst, **dadurch gekennzeichnet, dass** die Mittel zur Ausführung Folgendes umfassen:
- ein Schieberegister (SREG), das einen seriellen Ausgang (ROUT) umfasst, der mit einem ersten Eingang (CIN1) eines Logikkomparators (SCOMP) verbunden ist,
- einen seriellen Speicher (SMEM), der den Identifikationscode (ID) enthält und einen seriellen Ausgang (MOUT) umfasst, der mit einem zweiten Eingang (CIN2) des Komparators und einem seriellen Eingang (RIN) des Schieberegisters verbunden ist,
- Mittel (CNTR) zum Laden eines empfangenen Selektionscodes (MV) in das Schieberegister (SREG),
- Mittel (CNTR) zum Anlegen von M Schiebetakten (CK1) an das Schieberegister und von M Leseimpulsen (READ) an den Speicher,
- Mittel (MLCT, A2) zum Sperren des Komparators, wenn N Schiebetakte und Leseimpulse an das Register und an den Speicher angelegt wurden,
- Mittel zum Übertragen der im Schieberegister enthaltenen Daten an eine Kommunikationsschnittstelle (ADC, RFI) der integrierten Schaltung zu einem bestimmten Zeitpunkt (t7), wenn der Komparator ein Gleichheitssignal (EQ=1) ausgibt.

2. Integrierte Schaltung nach Anspruch 1, wobei die Mittel zum Sperren des Komparators eine erste Zählschaltung (MLCT) umfassen, die angeordnet ist, um die Anzahl N synchronisiert mit den Schiebetakten (CK1) und den Leseimpulsen (READ) zu zählen und ein Sperrsignal (STOP) für den Komparator auszugeben, wenn die Anzahl N gezählt ist.

3. Integrierte Schaltung nach Anspruch 2, wobei die erste Zählschaltung (MLCT) Folgendes umfasst:
- einen Rückwartszähler (DCT1),
- Mittel (CNTR, LOAD) zum Laden der Anzahl N (ML) in den Rückwartszähler und
- eine Logikschaltung (NO1) zum Ausgeben des Sperrsignals (STOP), wenn der Rückwartszähler den Wert Null erreicht.

4. Integrierte Schaltung nach einem der Ansprüche 2 oder 3, wobei die Mittel (A2, EQ) zum Sperren des Komparators auch angeordnet sind, um den Komparator zu sperren, wenn der Komparator ein Ungleichheitssignal (EQ=0) ausgibt.

5. Integrierte Schaltung nach einem der Ansprüche 2 bis 4, wobei die Mittel (MLCT, A2) zum Sperren des Komparators auch angeordnet sind, um die erste Zählschaltung (MLCT) zu sperren, wenn der Komparator ein Ungleichheitssignal (EQ=0) ausgibt.

6. Integrierte Schaltung nach einem der Ansprüche 2 bis 5, wobei der Komparator synchrone Flipflops (D1, D2, D3) umfasst, die von einem Signal (DEC) gesteuert sind, das mit den Schiebetakten (CK1) und den Leseimpulsen (READ) synchronisiert ist.

7. Integrierte Schaltung nach Anspruch 6, wobei die Mittel zum Sperren des Komparators ein Logikgatter (A2) umfassen, um das Synchronisationssignal (DEC) der Flipflops des Komparators zu blockieren.

8. Integrierte Schaltung nach einem der Ansprüche 1 bis 7, wobei die Mittel zum Übertragen von im Schieberegister enthaltenen Daten an die Kommunikationsschnittstelle der integrierten Schaltung Folgendes umfassen:
- Mittel (CTR, TRANSEN, A3) zum Verbinden eines seriellen Ausgangs des Schieberegisters mit der Kommunikationsschnittstelle (ADC, RFI) der integrierten Schaltung, wenn ein Autorisierungssignal (TRANSEN) ausgegeben wird,
- Mittel (TSCT) zum Ausgeben des Autorisierungssignals (TRANSEN) spätestens dann, wenn der bestimmte Zeitpunkt erreicht ist, und
- Mittel (NO2, I3) zum Verhindern der Ausgabe des Autorisierungssignals, wenn der Ausgang des Komparators einen Ungleichheitswert aufweist.

9. Integrierte Schaltung nach Anspruch 8, wobei die Mittel zum Ausgeben des Autorisierungssignals Folgendes umfassen:
- eine zweite Zählschaltung (TSCT), die angeordnet ist, um eine Anzahl P (ML) zu zählen und das Autorisierungssignal auszugeben, wenn die Anzahl P gezählt ist, und
- eine Steuereinrichtung (CNTR) zum Anlegen eines Zählsignals (TS) einer Einheit an die Zählschaltung bei jedem Empfang durch die integrierte Schaltung einer Antwortanfrage (EOF) auf die selektive Identifikationsanfrage.

10. Integrierte Schaltung nach Anspruch 9, wobei die zweite Zählschaltung (TSCT) Folgendes umfasst:
- einen Rückwartszähler (DCT2),
- Mittel (CNTR, A5, CK1) zum Laden der Anzahl P in den Rückwartszähler und
- Mittel (NO2) zum Ausgeben des Autorisierungssignals (TRANSEN), wenn der Rückwartszähler den Wert Null erreicht.

11. Integrierte Schaltung nach Anspruch 10, wobei die Mittel zum Laden der Anzahl P in den Rückwartszähler angeordnet sind, um mit dem Laden der Anzahl P nach dem Anlegen von N Schiebetakten (CK1) an das Schieberegister und N Leseimpulsen (READ) an den Speicher zu beginnen, wenn der Komparator kein Ungleichheitssignal (EQ=0) ausgibt.

12. Integrierte Schaltung nach einem der Ansprüche 10 oder 11, wobei die Mittel zum Laden der Anzahl P in den Rückwartszähler Mittel zum Laden, Bit für Bit, von L Bits des Identifikationscodes (ID), die vom Speicher (SMEM) nach N Leseimpulsen ausgegeben werden, umfassen.

13. Integrierte Schaltung nach Anspruch 12, wobei die Mittel zum Laden von L Bits des Identifikationscodes in den Rückwartszähler einen Zähler (BCT), der angeordnet ist, um L Zyklen des Ladens eines Bit zu zählen, und Mittel (A5) zum Sperren der Ladung des Rückwartszählers (DCT2), wenn die Anzahl L erreicht ist, umfassen.

14. Integrierte Schaltung nach einem der Ansprüche 1 bis 13, wobei das Schieberegister (SREG) auch einen parallelen Eingang aufweist, um den Selektionscode (MV, MV0-MV7) zu empfangen.

15. Integrierte Schaltung nach einem der Ansprüche 1 bis 14, wobei das Schieberegister (SREG) mindestens zwei parallel geschaltete Schieberegister (SREG0-SREG7) aufweist, die serielle Eingänge, die mit einem Demultiplexer (DMUX) verbunden sind, und serielle Ausgänge, die mit einem Multiplexer (MUX) verbunden sind, aufweisen.

16. Integrierte Schaltung nach einem der Ansprüche 1 bis 15, umfassend eine kontaktlose Kommunikationsschnittstelle (RFI), die über induktive Kopplung funktioniert.

17. Integrierte Schaltung nach einem der Ansprüche 1 bis 16, die angeordnet ist, um eine selektive Identifikationsanfrage INVENTORY auszuführen, die von der Norm ISO/IEC/FCD 15693-3 vorgesehen ist.

18. Tragbarer Gegenstand vom Typ Chipkarte, elektronisches Etikett oder dergleichen, umfassend eine integrierte Schaltung nach einem der Ansprüche 1 bis 17.

19. Verfahren zum Ausführen einer selektiven Identifikationsanfrage (INVENTORY), begleitet von einem Selektionscode (MV) mit N Bits, auf einer integrierten Schaltung (CIC), der ein Identifikationscode (ID) mit M Bits zugeordnet ist, **dadurch gekennzeichnet, dass** es folgende Schritte umfasst:
- das Vorsehen eines Schieberegisters (SREG), eines seriellen Speichers (SMEM) und eines Logikkomparators (SCOMP),
- das Speichern des Identifikationscodes (ID) im seriellen Speicher,
- das Laden des empfangenen Selektionscodes (MV) in das Schieberegister,
- das Verbinden eines seriellen Ausgangs (ROUT) des Schieberegisters mit einem ersten Eingang (CIN1) des Logikkomparators,
- das Verbinden eines seriellen Ausgangs (MOUT) des Speichers mit einem zweiten Eingang (CIN2) des Komparators und einem seriellen Eingang (RIN) des Schieberegisters,
- das Anlegen von M Schiebetakten an das Schieberegister und von M Leseimpulsen an den Speicher,
- das Sperren des Komparators, wenn N Schiebetakte und Leseimpulse an das Register und an den Speicher angelegt wurden, und
- das Übertragen der im Schieberegister enthaltenen Daten an eine Kommunikationsschnittstelle (ADC, RFI) der integrierten Schaltung zu einem bestimmten Zeitpunkt (t7), wenn der Komparator ein Gleichheitssignal (EQ) ausgibt.

20. Verfahren nach Anspruch 19, umfassend einen Schritt des Rückwärtszählens von der Anzahl N mittels eines ersten Rückwärtszählers (MLCT, DCT1), in dem die Anzahl N (ML) geladen ist, und einen Schritt des Ausgebens eines Sperrsignals (STOP) für den Komparator, wenn null erreicht ist.

21. Verfahren nach einem der Ansprüche 19 oder 20, umfassend einen Schritts des antizipierten Sperrens des Komparators, wenn der Komparator ein Ungleichheitssignal (EQ=0) ausgibt.

22. Verfahren nach einem der Ansprüche 19 bis 21, wobei der Schritt des Übertragens von im Schieberegister enthaltenen Daten an die Kommunikationsschnittstelle das Verbinden eines Ausgangs (ROUT) des Schieberegisters mit der Kommunikationsschnittstelle der integrierten Schaltung (ADC, RFI), wenn ein Autorisierungssignal (TRANSEN) ausgegeben wird, und das Ausgeben des Autorisierungssignals (TRANSEN=1) spätestens dann, wenn der bestimmte Zeitpunkt erreicht ist, umfasst, außer der Komparator gibt ein Ungleichheitssignal (EQ=0) aus.

23. Verfahren nach Anspruch 22, wobei das Autorisierungssignal mittels eines zweiten Rückwärtszählers (TSCT, DCT2) ausgegeben wird, der vorgesehen ist, um eine Anzahl P zu zählen, wobei das Autorisierungssignal ausgegeben wird, wenn der Rückwärtszähler null erreicht, wobei ein Rückwärtszählsignal einer Einheit (ST) an den zweiten Rückwärtszähler bei jedem Empfang einer Antwortanfrage (EOF) auf die selektive Identifikationsanfrage durch die integrierte Schaltung angelegt wird.

24. Verfahren nach Anspruch 23, umfassend einen Schritt des Ladens der Anzahl P in den zweiten Rückwartszähler nach dem Anlegen von N Schiebetakten an das Schieberegister und N Leseimpulsen an den Speicher, der dann ausgeführt wird, wenn der Komparator kein Ungleichheitssignal (EQ=0) ausgibt.

25. Verfahren nach Anspruch 24, wobei das Laden der Anzahl P in den zweiten Rückwartszähler das Laden, Bit für Bit, von L Bits des Identifikationscodes (ID), die vom Speicher nach Anlegen von N Leseimpulsen (READ) ausgegeben werden, in den zweiten Rückwartszähler umfasst.

26. Verfahren nach einem der Ansprüche 20 bis 25, wobei das Schieberegister mithilfe von mindestens zwei parallel angeordneten Schieberegistern (SREG0-SREG7) verwirklicht ist, die serielle Eingänge, die mit einem Demultiplexer (DMUX) verbunden sind, und serielle Ausgänge, die mit einem Multiplexer (MUX) verbunden sind, aufweisen.

27. Verfahren nach einem der Ansprüche 20 bis 26, das durchgeführt wird, um einen Befehl INVENTORY auszuführen, der von der Norm ISO/IEC/FCD 15693-3 vorgesehen ist.
